# EUROPÄISCHE PATENTSCHRIFT

(11) **EP 1 613 841 B1**
(45) Veröffentlichungstag und Bekanntmachung des Hinweises auf die Patenterteilung: **20.12.2006**
(21) Anmeldenummer: 05733568.9
(22) Anmeldetag: 13.04.2005
(51) Int. Cl.: F01K 25/06

(54) **VERFAHREN UND VORRICHTUNG ZUR AUSFÜHRUNG EINES THERMODYNAMISCHEN KREISPROZESSES**
METHOD AND DEVICE FOR CARRYING OUT A THERMODYNAMIC CYCLIC PROCESS
PROCEDE ET DISPOSITIF DE MISE EN OEUVRE D'UN PROCESSUS CYCLIQUE THERMODYNAMIQUE

(30) Priorität: 16.04.2004 DE 102004018627
(43) Veröffentlichungstag der Anmeldung: 11.01.2006
(73) Patentinhaber: SIEMENS AKTIENGESELLSCHAFT, 80333 München (DE)
(72) Erfinder: LENGERT, Jörg, 91475 Lonnerstadt (DE)
(86) Internationale Anmeldenummer: PCT/EP2005/051617
(87) Internationale Veröffentlichungsnummer: WO 2005/100755

(56) Entgegenhaltungen:
- EP-A- 0 649 985
- EP-A- 1 058 069
- EP-A- 1 070 830
- US-A1- 2004 055 302
- LEIBOWITZ H M ET AL: "INSTALLATION AND EARLY TEST RESULTS OF A 3 MW KANILA CYCLE DEMONSTRATION PLANT" CONVERSION TECHNOLOGIES ELECTROCHEMICAL CONVERSIONS. SAN DIEGO, AUG. 3, Bd. VOL. 3 CONF. 27, 3. August 1992 (1992-08-03), Seiten 335-342, XP000392711 ISBN: 0-7803-0693-7
- PATENT ABSTRACTS OF JAPAN Bd. 1998, Nr. 13, 30. November 1998 (1998-11-30) & JP 10 205308 A (TOSHIBA CORP), 4. August 1998 (1998-08-04)

## Beschreibung

Die Erfindung bezieht sich auf ein Verfahren und eine Vorrichtung zur Ausführung eines thermodynamischen Kreisprozesses gemäß Patentanspruch 1 bzw. Patentanspruch 8.

Wärmekraftwerke nutzen thermodynamische Kreisprozesse zur Umwandlung von Wärme in mechanische bzw. elektrische Energie. Ein solches Wärmekraftwerk und thermodynamischer Kreisprozess ist in dem Dokument EP 1070830 A offenbart. Konventionelle Wärmekraftwerke erzeugen die Wärme durch die Verbrennung von Brennstoffen, vor allem den fossilen Energieträgern Kohle, Öl und Gas. Die Kreisprozesse werden hierbei z.B. auf Basis des klassischen Rankine-Kreisprozesses mit Wasser als Arbeitsmittel betrieben. Sein hoher Siedepunkt macht Wasser allerdings vor allem bei der Nutzung von Wärmequellen mit Temperaturen zwischen 100° bis 200 °C, z.B. geothermischen Flüssigkeiten oder Abwärme aus Verbrennungsprozessen, aufgrund mangelnder Wirtschaftlichkeit unattraktiv.

Für Wärmequellen mit solch niedriger Temperatur wurden in den letzten Jahren verschiedenste Technologien entwickelt, die es ermöglichen, deren Wärme mit gutem Wirkungsgrad in mechanische bzw. elektrische Energie umzuwandeln. Neben dem Rankine-Prozess mit organischem Arbeitsmittel (organic rankine cycle, ORC) zeichnet sich vor allem der so genannte Kalina-Kreisprozess durch deutlich bessere Wirkungsgrade gegenüber dem klassischen Rankine-Prozess aus. Auf der Basis des Kalina-Kreisprozesses wurden diverse Kreisläufe für unterschiedlichste Anwendungen entwickelt. Diese Kreisläufe verwenden als Arbeitsmittel anstatt Wasser ein Zweistoffgemisch (z.B. Ammoniak und Wasser), wobei der nicht-isotherme Siede- und Kondensationsvorgang des Gemisches ausgenutzt wird, um den Wirkungsgrad des Kreislaufs im Vergleich zu dem Rankine-Kreislauf zu erhöhen.

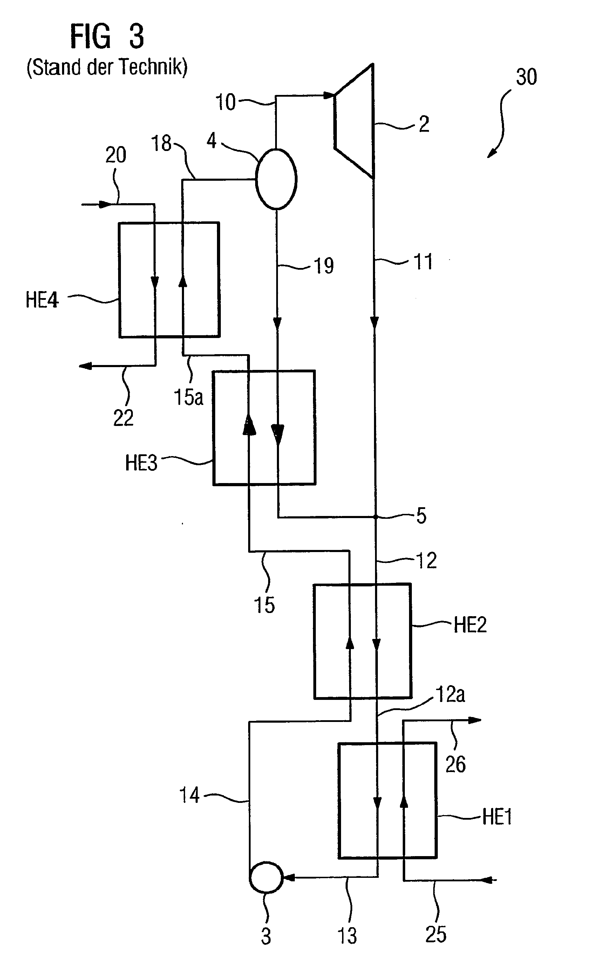

Für Temperaturen der Wärmequelle von 100 bis 140 °C wird bevorzugt der Kalina-Kreislauf KCS 34 (Kalina Cycle System 34) verwendet, der z.B. in dem Geothermalkraftwerk Husavik/Island angewendet wird. Bei diesem Kreislauf (siehe auch FIG 3) wird ein flüssiges Arbeitsmittel in einen ersten Wärmetauscher gepumpt, wo es durch eine Teilkondensation eines entspannten Arbeitsmittelstromes erwärmt wird. Der dadurch entstehende erwärmte Arbeitsmittelstrom wird danach durch Abkühlung der flüssigen Phase eines teilweise verdampften Arbeitsmittelstromes in einem zweiten Wärmetauscher weiter erwärmt und anschließend in einem dritten Wärmetauscher unter Verwendung von Wärme, die von einer externen Wärmequelle (z.B. einer geothermischen Flüssigkeit) übertragen wird, teilweise (z.B. bis zu einem Flüssigkeitsgehalt von 14 - 18 %) verdampft. Danach wird von dem teilweise verdampften Arbeitsmittelstromes in einem Separator die flüssige Phase von der dampfförmigen Phase getrennt.

Die dampfförmige Phase wird in einer Turbine entspannt und ihre Energie zur Erzeugung von Strom verwendet. Die flüssige Phase wird durch den zweiten Wärmetauscher geleitet und zur weiteren Erwärmung des erwärmten Arbeitsmittelstromes genutzt. In einem Mischer werden die flüssige Phase und die entspannte dampfförmige Phase zusammengeführt und der bereits erwähnte entspannte Arbeitsmittelstrom gebildet. Der entspannte Arbeitsmittelstrom wird anschließend in dem ersten Wärmetauscher teilweise kondensiert und abschließend in einem Kondensator vollständig kondensiert, so dass der eingangs erwähnte flüssige Arbeitsmittelstrom erzeugt und der Kreislauf geschlossen wird.

Ausgehend von diesem bekannten Kreisprozess ist es Aufgabe der vorliegenden Erfindung, ein Verfahren und eine Vorrichtung zur Ausführung eines thermodynamischen Kreisprozesses anzugeben, welche bei gleicher externer Wärmequelle und Kühlwassertemperatur und im Wesentlichen gleich bleibenden Anlagenkosten eine gleiche oder sogar höherer Ausbeute an mechanischer und/oder elektrischer Energie ermöglichen, wobei sich allerdings das Verfahren und die Vorrichtung durch eine geringere Komplexität auszeichnen.

Die Lösung der auf das Verfahren gerichteten Aufgabe gelingt erfindungsgemäß durch ein Verfahren gemäß Patentanspruch 1. Vorteilhafte Ausgestaltungen des Verfahrens sind jeweils Gegenstand der Unteransprüche 2 bis 7. Die Lösung der auf die Vorrichtung gerichteten Aufgabe gelingt erfindungsgemäß durch eine Vorrichtung gemäß Patentanspruch 8. Vorteilhafte Ausgestaltungen der Vorrichtung sind jeweils Gegenstand der Unteransprüche 9 bis 14.

Erfindungsgemäß wird durch Teilkondensation des entspannten Arbeitsmittelstroms der druckbeaufschlagte, flüssige Arbeitsmittelstrom nicht nur erwärmt, sondern sogar teilweise verdampft. Dies ist dadurch möglich, dass im Vergleich zu dem eingangs erwähnten Kreislauf KCS 34 auf den zweiten Wärmetauscher und somit zur Übertragung von Wärme von der flüssigen Phase des teilweise verdampften Arbeitsmittelstromes zur weiteren Erwärmung bzw. zum teilweisen Verdampfen des erwärmten Arbeitsmittelstroms verzichtet wird. Hierdurch wird der flüssigen Phase weniger Wärme entzogen, die dafür anschließend zur besseren Erwärmung und teilweisen Verdampfung des druckbeaufschlagten, flüssigen Arbeitsmittelstromes durch Teilkondensation des entspannten Arbeitsmittelstroms verwendet wird.

Durch eine entsprechende Anpassung der Wärmeflächen der verbleibenden Wärmetauscher und anderer Kreislaufparameter ist es möglich, die Ausbeute an mechanischer und/oder elektrischer Energie im Vergleich zu dem bekannten Kreislauf nicht nur gleich zu halten, sondern sogar noch zu erhöhen. Die Kosten eines ggf. erhöhten Heizflächenbedarfs bei den verbleibenden Wärmetauschern können hierbei weitgehend kompensiert werden durch den Wegfall des zweiten Wärmetauschers und die dadurch vereinfachte Rohrleitungsführung, so dass die Anlagenkosten im Wesentlichen gleich bleiben.

Durch den Verzicht auf den eingangs erwähnten zweiten Wärmetauscher bzw. den Verzicht auf eine Wärmeübertragung von der flüssigen Phase zu dem ersten teilweise verdampften Arbeitsmittelstromes zeichnet sich die erfindungsgemäße Vorrichtung bzw. das erfindungsgemäße Verfahren durch eine im Vergleich zum Stand der Technik geringere Komplexität aus.

Das teilweise Verdampfen des druckbeaufschlagten, flüssigen Arbeitsmittelstroms durch Teilkondensation des entspannten Arbeitsmittelstroms kann dadurch begünstigt werden, dass der Druck der dampfförmigen Phase weniger als 24 bar und somit deutlich weniger als die in bisher bekannten Kreisläufen üblichen 33 bar beträgt. Hierdurch kann das gesamte Druckniveau im Kreislauf abgesenkt werden, wodurch wiederum die Siedetemperatur des Arbeitsmittels verringert werden kann.

Wenn der Druck der dampfförmigen Phase vor Eintritt in die Turbine dreimal so groß wie der Druck der entspannten, dampfförmigen Phase ist, ist es zudem möglich, konventionelle einstufige Entspannerturbinen zu verwenden. Derartige Entspannerturbinen weisen Wirkungsgrade von bis 88 % und somit deutlich höhere Wirkungsgrade als die bisher in derartigen Kreisläufen verwendeten, auf einen maximalen Druck von z.B. 33 bar ausgelegten mehrstufigen Entspannerturbinen mit Wirkungsgraden von ca. 75 %. Ein mit dem Absinken des Druckniveaus bzw. des geringeren Druckverhältnisses über der Entspannerturbine möglicherweise einhergehender Wirkungsgradverlust im Kreislauf wird somit mehr als ausgeglichen durch den besseren Wirkungsgrad der Turbine und dem größeren möglichen Arbeitsmitteldurchsatz, der es erlaubt, dem Thermalwasser vergleichsweise mehr Energie zu entziehen.

Bei Verwendung einer konventionellen einstufigen Entspannerturbine entfallen außerdem die Kosten für eine zweite Turbinenstufe oder Mehrkosten für eine spezielle Turbinenauslegung auf hohe Druckdifferenzen.

Gemäß einer Ausgestaltung der Erfindung wird als Arbeitsmittel ein Mehrstoff-Gemisch verwendet. Bei dem Mehrstoff-Gemisch handelt es sich vorzugsweise um ein Zweistoff-Gemisch, insbesondere ein Ammoniak-Wasser-Gemisch. Aufgrund der nichtisothermen Verdampfung und Kondensation eines solchen Gemisches kann ein besonders hoher Wirkungsgrad des Kreislaufes erzielt werden.

Eine besonders umweltfreundliche Energiegewinnung ist durch die Verwendung einer geothermischen Flüssigkeit, insbesondere Thermalwasser, aus einer Geothermalquelle als Wärmequelle möglich. Als Wärmequelle können aber auch Abgase (Rauchgase) von Gas- und/oder Dampfturbinenanlagen oder die in industriellen Produktionsprozessen (z.B. bei der Stahlproduktion) erzeugte Wärme verwendet werden.

Ein hoher Wirkungsgrad des Kreislaufes kann hierbei dadurch erzielt werden, dass die Wärmequelle eine Temperatur von 100 °C bis 200 °C, insbesondere 100 °C bis 140 °C, aufweist.

Die Erfindung sowie weitere vorteilhafte Ausgestaltungen der Erfindung gemäß den Merkmalen der Unteransprüche werden im Folgenden anhand von Ausführungsbeispielen in den Figuren näher erläutert. Darin zeigen:
- FIG 1: eine Schaltung einer erfindungsgemäßen Vorrichtung zur Ausführung eines thermodynamischen Kreisprozesses in vereinfachter, schematischer Darstellung,
- FIG 2: eine Kreislaufrechnung für eine Vorrichtung gemäß Figur 1,
- FIG 3: eine Schaltung einer aus dem Stand der Technik bekannten Vorrichtung zur Ausführung eines thermodynamischen Kreisprozesses in vereinfachter, schematischer Darstellung,
- FIG 4: eine Kreislaufrechnung für eine Vorrichtung gemäß Figur 3.

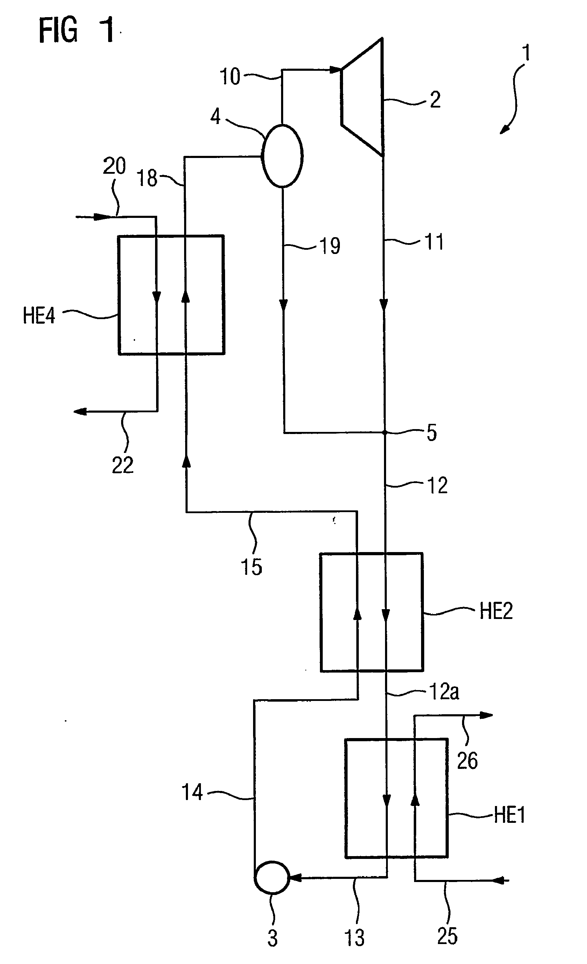

Die in Figur 1 gezeigte Vorrichtung 1 zur Ausführung eines thermodynamischen Kreisprozesses weist einen (rekuperativen) Wärmetauscher HE 4 auf, der primärseitig von heißem Thermalwasser 20 einer nicht näher dargestellten Geothermalquelle durchflossen wird und sekundärseitig zum einen mit einem Wärmetauscher HE2 und zum anderen mit einem Separator 4 verbunden ist. Der Separator 4 dient zum Trennen einer dampfförmigen von einer flüssigen Phase eines teilweise verdampften Arbeitsmittels. Ein dampfseitiger Ausgang des Separators 4 ist mit einer Turbine 2 verbunden. Die Turbine 2 ist ausgangsseitig mit einem Mischer 5 verbunden, der noch mit einem Flüssigkeitsausgang des Separators 4 verbunden ist. Ausgangsseitig ist der Mischer 5 mit der Sekundärseite eines (rekuperativen) Wärmetauschers HE2 verbunden, die wiederum mit der Primärseite eines sekundärseitig von Kühlwasser durchflossenen Kondensators HE1 verbunden ist. Der Kondensator HE1 ist an seinem primärseitigen Ausgang, ggf. über einen Kondensattank, über eine Pumpe 3 mit der Primärseite des Wärmetauschers HE2 verbunden. Die Primärseite des Wärmetauschers HE2 ist wiederum mit der Sekundärseite des bereits erwähnten Wärmetauschers HE4 verbunden.

Als Arbeitsmittel wird in der Vorrichtung 1 ein Zweistoff-Gemisch aus Wasser und Ammoniak verwendet, welches somit eine nicht isotherme Verdampfung und Kondensation aufweist. Das Arbeitsmittel liegt nach dem Kondensator HE1 in einem flüssigen Zustand als flüssiger Arbeitsmittelstrom 13 vor. Mit Hilfe der Pumpe 3 wird der gesamte flüssige Arbeitsmittelstrom 13 auf einen erhöhten Druck gepumpt und ein druckbeaufschlagter, flüssiger Arbeitsmittelstrom 14 erzeugt.

Der druckbeaufschlagte, flüssige Arbeitsmittelstrom 14 wird der Primärseite des Wärmetauschers HE2 zugeführt und durch Teilkondensation eines sekundärseitig durch den Wärmetauscher HE2 geführten entspannten Arbeitsmittelstromes 12 erwärmt und teilweise verdampft, so dass primärseitig nach dem Wärmetauscher HE2 ein erster teilweise verdampfter Arbeitsmittelstrom 15 und sekundärseitig ein teilkondensierter, entspannter Arbeitsmittelstrom 12a vorliegen. Der Dampfanteil im ersten teilweise verdampften Arbeitsmittelstrom 15 beträgt z.B. 15 %.

Der erste teilweise verdampfte Arbeitsmittelstrom 15 wird ohne weitere Erwärmung der Sekundärseite des Wärmetauschers HE4 zugeführt.

Primärseitig wird der Wärmetauschers HE4 von heißem Thermalwasser 20 durchströmt. In dem Wärmetauscher HE4 wird der erste teilweise verdampfte Arbeitsmittelstrom 15 durch Abkühlung des Thermalwassers 20 weiter verdampft und ein zweiter teilweise verdampfter Arbeitsmittelstrom 18 erzeugt. Der zweite teilweise verdampfte Arbeitsmittelstrom 18 wird dem Separator 4 zugeführt, in dem die dampfförmige Phase 10 von der flüssigen Phase 19 des zweiten teilweise verdampften Arbeitsmittelstroms 18 getrennt wird. Die dampfförmige Phase 10 wird anschließende in der Turbine 2 entspannt und ihre Energie in eine nutzbare Form, z.B. über einen nicht dargestellten Generator in Strom, umgewandelt und eine entspannte dampfförmige Phase 11 erzeugt.

In dem Mischer 5 werden die entspannte dampfförmige Phase 11 und die in dem Separator 4 abgetrennte flüssige Phase 19 wieder zusammengeführt und ein entspannter Arbeitsmittelstrom 12 gebildet.

Eine gezielte Wärmeübertragung von der flüssigen Phase 19 zu dem ersten teilweise verdampften Arbeitsmittelstrom 15, z.B. mittels eines speziell hierfür vorgesehenen Wärmetauschers, ist hierbei nicht vorgesehen. Der teilweise verdampfte Arbeitsmittelstrom 15 weist somit vor dem weiteren Verdampfen in dem Wärmetauscher HE4 im Wesentlichen die gleiche Temperatur auf wie nach seiner Erzeugung durch Teilkondensation des entspannten Arbeitsmittelstroms 12. Unter "im Wesentlichen gleiche Temperatur" wird hierbei verstanden, dass die Temperaturdifferenz nur wenige Kelvin beträgt und z.B. durch eine leichte Abkühlung des den Wärmetauscher HE2 verlassenden ersten teilweise verdampften Arbeitsmittelstromes aufgrund von Wärmeverlusten in den Verbindungsrohren zu dem Wärmetauscher HE4 verursacht ist.

Der entspannter Arbeitsmittelstrom 12 wird in dem Wärmetauscher HE 2 teilkondensiert und ein teilkondensierter, entspannter Arbeitsmittelstrom 12a erzeugt. Der teilkondensierte, entspannte Arbeitsmittelstrom 12 wird anschließend in dem Kondensator HE1 mit Hilfe des (zulaufenden) Kühlwasserstromes 25 kondensiert und der flüssige Arbeitsmittelstrom 13 erzeugt. Die durch die Kondensation des entspannten Arbeitsmittelstroms 12a an den Kühlwasserstrom 25 übertragene Wärme wird durch den ablaufenden Kühlwasserstrom 26 abgeführt.

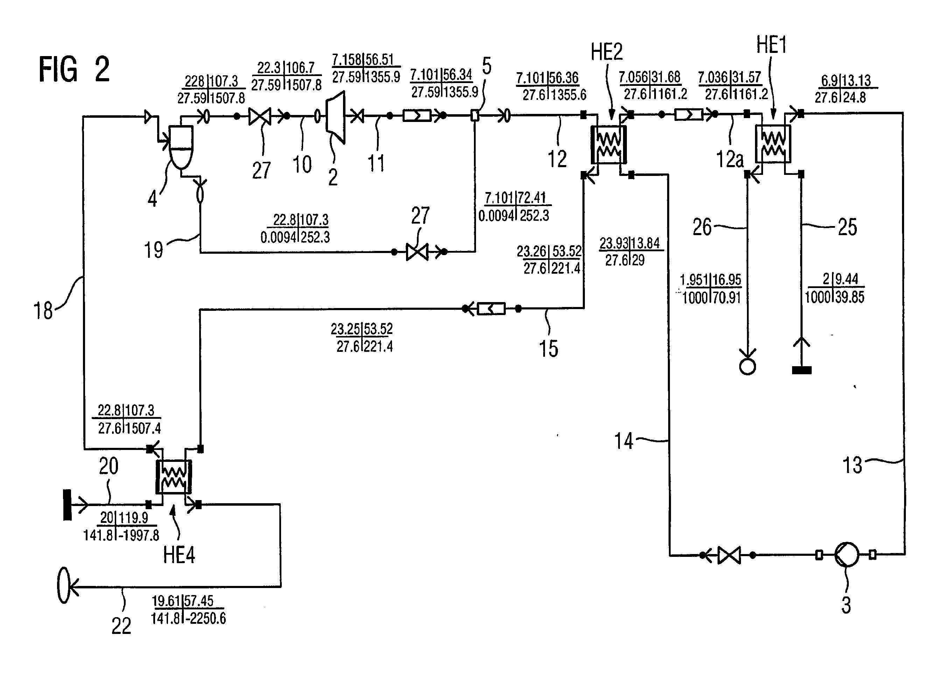

Die Figur 2 zeigt eine Kreislaufberechnung für eine Vorrichtung zur Ausführung des thermodynamischen Kreisprozesses, die im Wesentlichen der in Figur 1 dargestellten Vorrichtung 1 entspricht und zusätzlich nur noch um einige Ventile 27 ergänzt wurde. Als Ausgangsbedingungen für die Berechnungen wurden eine Ammoniakkonzentration im Wasser von 95 % (bei flüssigem, vollständig kondensiertem Arbeitsmittel)und ein Thermalwasserstrom 20 mit einer Temperatur von 120 °C sowie einem Massestrom von 141.8 kg/s angenommen. Die Temperatur des Kühlwasserstromes 25 beträgt 9.4 °C. Wie aus FIG 1 und 2 ersichtlich, sind Änderungen der Ammoniakkonzentration zur Wirkungsgraderhöhung, abgesehen von der durch die Trennung der dampfförmigen von der flüssigen Phase nach der Wärmeübertragung von der externen Wärmequelle in den beiden Phasen vorliegenden unterschiedlichen Ammoniakkonzentrationen, nicht vorgesehen.

Die Tabelle 1 zeigt für einige ausgewählte Ströme des Kreislaufes das Ergebnis der Kreislaufberechnung, wobei die Leistungen der Wärmetauscher gemäß Tabelle 2 gewählt sind.

**Tabelle 1:**

| Strom | Temperatur (°C) | Enthalpie (kJ/kg) | Massenstrom (kg/s) | Druck (bar) |
|---|---|---|---|---|
| 10 | 106,7 | 1507,8 | 27,59 | 22,3 |
| 11 | 56,51 | 1355,9 | 27,59 | 7,158 |
| 13 | 13,13 | 24,8 | 27,6 | 6,9 |
| 15 | 53,52 | 221,4 | 27,6 | 23,26 |
| 20 | 119,9 | -1997,8 | 141,8 | 20 |
| 22 | 57,45 | -2250,6 | 141,8 | 19,61 |

**Tabelle 2:**

| Wärmetauscher | Leistung (kW) |
|---|---|
| HE 1 (Kondensator) | 31,0 |
| HE 2 | 5,3 |
| HE 4 | 34,5 |
| Summe | 70,8 |

Die Temperatur des ersten teilweise verdampften Arbeitsmittelstromes 15 vor Eintritt in den Wärmetauscher HE4 beträgt 53,52 °C und damit die gleiche Temperatur wie nach dem Verlassen des Wärmetauschers HE2. Die unter diesen Bedingungen mit Hilfe der Turbine 2 erzeugbare elektrische Leistung beträgt 4033 kW.

Der Druck der dampfförmigen Phase 10 vor Eintritt in die Turbine 2 beträgt 22,3 bar und der Druck der entspannten, dampfförmigen Phase 11 nach Austritt aus der Turbine 2 beträgt 7,158 bar. Durch den gewählten Eingangsdruck von 22,3 bar und dem Druckverhältnis von ca. 3.1 zwischen dem Druck der dampfförmigen Phase vor und nach der Turbine 2 kann als Turbine 2 eine konventionelle einstufige Turbine mit hohem Wirkungsgrad verwendet werden, was mit entsprechenden Kosten- und Wirkungsgradvorteilen verbunden ist.

Die Figur 3 zeigt demgegenüber die Schaltung einer im Stand der Technik als KCS 34 (Kalina Cycle System 34) bekannten Vorrichtung 30 zur Ausführung eines thermodynamischen Kreisprozesses. Zum besseren Vergleich der bekannten Vorrichtung 30 mit der in FIG 1 dargestellten erfindungsgemäßen Vorrichtung sind einander entsprechende Komponenten und Ströme mit gleichen Bezugszeichen versehen. Die Vorrichtung 30 unterscheidet sich von der in FIG 1 gezeigten erfindungsgemäßen Vorrichtung durch einen zusätzlichen, primärseitig zwischen den Wärmetaucher HE2 und den Wärmetaucher HE4 und sekundärseitig zwischen den Separator 4 und den Mischer 5 geschalteten Wärmetauscher HE3. Mit Hilfe des Wärmetauscher HE2 wird durch Teilkondensation des entspannten Arbeitsmittelstroms 12 der druckbeaufschlagte, flüssige Arbeitsmittelstrom 14 erwärmt und ein erwärmter (flüssiger) Arbeitsmittelstrom 15 erzeugt. Der erwärmte Arbeitsmittelstrom 15 wird anschließend mittels des Wärmetauscher HE3 durch Abkühlung der flüssigen Phase 19 weiter erwärmt und somit ein weiter erwärmter Arbeitsmittelstrom 15a erzeugt.

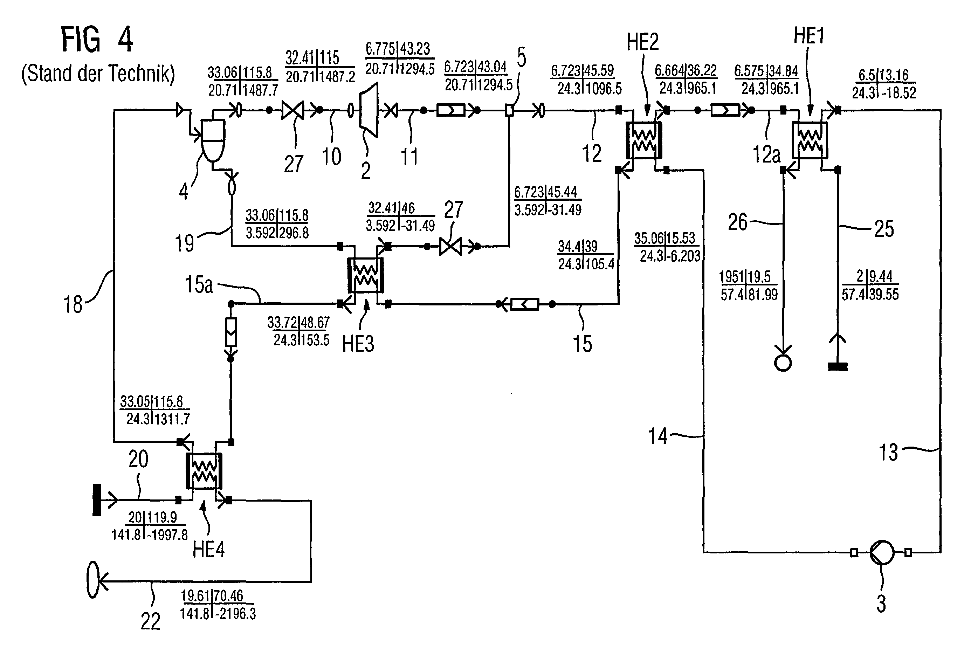

Die Figur 4 zeigt eine Kreislaufrechnung für eine aus dem Stand der Technik bekannte Vorrichtung, die im Wesentlichen der in Figur 3 dargestellten Vorrichtung 30 entspricht und zusätzlich nur noch um einige Ventile 27 ergänzt wurde. Als Ausgangsbedingungen für die Berechnungen wurden eine Ammoniakkonzentration im Wasser von 89.2 % und - wie im Fall der Kreislaufrechnung von Figur 2 - ein Thermalwasserstrom 20 mit einer Temperatur von 120 °C sowie einem Massestrom von 141.8 kg/s angenommen. Die Temperatur des Kühlwasserstromes 25 beträgt 9.4 °C.

Die Tabelle 3 zeigt für einige ausgewählte Ströme des Kreislaufes das Ergebnis der Kreislaufberechnung, wobei die Leistungen der Wärmetauscher gemäß Tabelle 4 gewählt sind.

**Tabelle 3:**

| Strom | Temperatur (°C) | Enthalpie (kJ/kg) | Massenstrom (kg/s) | Druck (bar) |
|---|---|---|---|---|
| 10 | 115 | 1487,2 | 20,71 | 32,41 |
| 11 | 43,23 | 1294,5 | 20, 71 | 6,775 |
| 13 | 13,16 | -18,52 | 24,3 | 6,5 |
| 15 | 39 | 105,4 | 24,3 | 34,4 |
| 15a | 48,67 | 153,5 | 24,3 | 33,72 |
| 20 | 119,9 | -1997,8 | 141,8 | 20 |
| 22 | 70,46 | -2196,3 | 141,8 | 19,61 |

**Tabelle 4:**

| Wärmetauscher | Leistung (kW) |
|---|---|
| HE 1 (Kondensator) | 24,1 |
| HE 2 | 2,7 |
| HE 3 | 1,2 |
| HE 4 | 28,1 |
| Summe | 55,1 |

Die hierbei erzeugbare elektrische Leistung beträgt nur 3818 kW. Die erzielbare elektrische Leistung ist somit im Fall des erfindungsgemäßen Kreislaufes gemäß FIG 1 und 2 um 5,6 % höher als im Fall des aus dem Stand der Technik bekannten Kreisprozesses.

Der erwärmte Arbeitsmittelstrom 15, der den Wärmetauscher HE2 mit einer Temperatur von 39 °C verlässt, wird im Wärmetauscher HE3 durch Abkühlung der flüssigen Phase 19 weiter auf 48,87 °C erwärmt und als Arbeitsmittelstrom 15a dem Wärmetauscher HE4 zugeführt.

Während im bekannten Fall die Temperatur des abgeführten Thermalwassers 22 noch 70,46 °C beträgt, weist im Fall des erfindungsgemäßen Kreisprozesses gemäß FIG 2 das abgeführte Thermalwasser 22 nur noch eine Temperatur von 57,45 °C auf. Im Fall des erfindungsgemäßen Kreisprozesses kann dem Thermalwasser somit vergleichsweise mehr Energie entzogen werden.

Aufgrund des Druckes der dampfförmigen Phase 10 am Eingang der Turbine 2 von 32,41 bar und des Druckverhältnisses von 4,8 zwischen dem Druck der dampfförmigen Phase am Eingang der Turbine 2 und dem Druck der entspannten dampfförmigen Phase 11 am Ausgang der Turbine kann im Fall des Kreislaufes von FIG 4 keine konventionelle einstufige Turbine verwendet werden. Entweder müssen dann zwei hintereinander geschaltete, konventionelle einstufige Turbinen verwendet werden, oder es muss eine einzige, speziell für hohe Drücke und Druckverhältnisse größer als 4 geeignete Turbine verwendet werden, was in beiden Fällen gegenüber einer einzigen, konventionellen Turbine mit höheren Kosten und mit Wirkungsgradverlusten verbunden ist.

Der aufgrund der erhöhten Wärmetauscherleistung auch erhöhte Heizflächenbedarf von 28,5 % hat einen erhöhten Investitionsbedarf zur Folge. Diese erhöhten Kosten können aber zu einem Großteil durch die vereinfachte Rohrleitungsführung und durch den Wegfall des Wärmetauschers HE3 kompensiert werden, so dass die Anlagenkosten insgesamt im Wesentlichen gleich bleiben.

Als variation können - wie auch in dem Schaltungsbeispiel gem. FIG 2 geschehen - zusätzlich Ventile in die Schaltung geschaltet werden.

## Patentansprüche

1. Verfahren zur Ausführung eines thermodynamischen Kreisprozesses mit zumindest den folgenden Verfahrensschritten:
- Pumpen eines flüssigen Arbeitsmittelstrom (13) auf einen erhöhten Druck und Bilden eines druckbeaufschlagten, flüssigen Arbeitsmittelstroms (14);
- Erwärmen und teilweises Verdampfen des druckbeaufschlagten, flüssigen Arbeitsmittelstroms (14) durch Teilkondensation eines entspannten Arbeitsmittelstroms (12) und Erzeugen eines ersten teilweise verdampften Arbeitsmittelstroms (15) und eines teilkondensierten, entspannten Arbeitsmittelstroms (12a);
- weiteres Verdampfen des teilweise verdampften Arbeitsmittelstroms (15) mit Wärme, die von einer externen Wärmequelle (20) übertragen wird, und Erzeugen eines zweiten zumindest teilweise verdampften Arbeitsmittelstroms (18),
- Trennen einer flüssige Phase (19) von einer dampfförmigen Phase (10) des zweiten zumindest teilweise verdampften Arbeitsmittelstroms (18);
- Entspannen der dampfförmigen Phase (10), Umwandeln ihrer Energie in eine nutzbare Form und Erzeugen einer entspannten dampfförmigen Phase (11);
- Mischen der flüssigen Phase (19) mit der entspannten dampfförmigen Phase (11) und Bilden des entspannten Arbeitsmittelstroms (12);
- vollständige Kondensation des teilkondensierten, entspannten Arbeitsmittelstroms (12a) und Erzeugen des flüssigen Arbeitsmittelstroms (13).

2. Verfahren nach Anspruch 1,
wobei der Druck der dampfförmigen Phase (10) weniger als 24 bar beträgt.

3. Verfahren nach Anspruch 1 oder 2,
wobei der Druck der dampfförmigen Phase (10) drei- bis viermal so groß ist wie der Druck der entspannten dampfförmigen Phase (11).

4. Verfahren nach einem der vorhergehenden Ansprüche,
wobei als Arbeitsmittel ein Mehrstoffgemisch verwendet wird.

5. Verfahren nach Anspruch 4,
wobei als Mehrstoff-Gemisch ein Zweistoff-Gemisch, insbesondere ein Ammoniak-Wasser-Gemisch, verwendet wird.

6. Verfahren nach einem der vorhergehenden Ansprüche,
wobei als externe Wärmequelle (20) eine geothermische Flüssigkeit, insbesondere Thermalwasser, verwendet wird.

7. Verfahren nach einem der vorhergehenden Ansprüche,
wobei die Wärmequelle (20) eine Temperatur von 100 °C bis 140 °C aufweist.

8. Vorrichtung zur Ausführung eines thermodynamischen Kreisprozesses, insbesondere zur Durchführung des Verfahrens nach einem der vorhergehenden Ansprüche, mit zumindest
- einer Pumpe (3) zum Pumpen eines flüssigen Arbeitsmittelstromes (13) auf einen erhöhten Druck und Erzeugen eines druckbeaufschlagten, flüssigen Arbeitsmittelstromes (14) ;
- einem ersten Wärmetauscher (HE2) zur Erzeugung eines ersten teilweise verdampften Arbeitsmittelstroms (15) durch Erwärmen und teilweises Verdampfen des druckbeaufschlagten, flüssigen Arbeitsmittelstroms (14) durch teilweise Kondensation eines entspannten Arbeitsmittelstroms(12);
- einem zweiten Wärmetauscher (HE4) zur Erzeugung eines zweiten zumindest teilweise verdampften Arbeitsmittelstroms (18) durch weiteres Verdampfen des ersten teilweise verdampften Arbeitsmittelstroms (15) mit Wärme, die von einer externen Wärmequelle (20) übertragen wird;
- einem Separator zum Trennen einer flüssige Phase (19) von einer dampfförmigen Phase (10) des zweiten zumindest teilweise verdampften Arbeitsmittelstroms (18);
- einer Einrichtung (2), insbesondere Turbine, zum Entspannen der dampfförmigen Phase (10), Umwandeln ihrer Energie in eine nutzbare Form und Erzeugen einer entspannten dampfförmigen Phase (11);
- einem Mischer (5) zum Mischen der flüssigen Phase mit der entspannten dampfförmigen Phase und Erzeugen eines entspannten Arbeitsmittelstroms (12);
- einen dritten Wärmetauscher (HE1) zum vollständigen Kondensieren des teilweise kondensierten, entspannten Arbeitsmittelstroms (12a) und Erzeugen des flüssigen Arbeitsmittelstroms (13).

9. Vorrichtung nach Anspruch 8,
wobei der Druck der dampfförmigen Phase (10) weniger als 24 bar beträgt.

10. Vorrichtung nach einem der Ansprüche 8 oder 9,
wobei der Druck der dampfförmigen Phase (10) drei- bis viermal so groß ist wie der Druck der entspannten dampfförmigen Phase (11).

11. Vorrichtung nach einem der Ansprüche 8 bis 10,
wobei das Arbeitsmittel aus einem Mehrstoff-Gemisch besteht.

12. Vorrichtung nach Anspruch 11,
wobei das Mehrstoffgemisch ein Zweistoffgemisch, insbesondere ein Ammoniak-Wasser-Gemisch, ist.

13. Vorrichtung nach einem der Ansprüche 8 bis 12,
mit einer geothermischen Flüssigkeit, insbesondere Thermalwasser, als externer Wärmequelle (20).

14. Vorrichtung nach einem der Ansprüche 8 bis 13,
wobei die externe Wärmequelle (20) eine Temperatur von 100 °C bis 140 °C aufweist.

## Claims

1. Method for executing a thermodynamic cycle process with at least the following steps:
- Pumping a flow of liquid working medium (13) at an increased pressure and forming a pressurized, liquid working medium flow (14);
- Heating up and part vaporization of the pressurized, liquid working medium flow (14) by part condensation of an expanded working medium flow (12) and creation of a first partly vaporized working medium flow (15) and of a partly condensed, expanded working medium flow (12a);
- Further vaporization of the partly vaporized working medium flow (15) with heat which is transferred from an external heat source (20), and creation of a second at least partly vaporized working medium flow (18);
- Separation of a liquid phase (19) from a vapor phase (10) of the second at least partly vaporized working medium flow (18) ;
- Expansion of the vapor phase (10), conversion of its energy into a usable form and creation of an expanded vapor phase (11) ;
- Mixing of the liquid phase (19) with the expanded vapor phase (11) and formation of the expanded working medium flow (12);
- Complete condensation of the partly condensed, expanded working medium flow (12a) and creation of the liquid working medium flow (13).

2. Method in accordance with claim 1,
with the pressure of the vapor phase (10) amounting to less than 24 bar.

3. Method in accordance with claim 1 or 2,
with the pressure of the vapor phase (10) being three to four times as great as the pressure of the expanded vapor phase (11).

4. Method in accordance with one of the previous claims.
with a multi-substance mixture being used as working medium flow.

5. Method in accordance with claim 4,
with a two-substance mixture, especially an ammonia-water mixture, being used as a multi-substance mixture.

6. Method in accordance with one of the previous claims.
with a geothermal liquid, especially thermal water, being used as an external heat source (20).

7. Method in accordance with one of the previous claims, with the heat source (20) having a temperature of 100°C to 140°C.

8. Device for executing a thermodynamic cycle process, especially for executing the method in accordance with one of the previous claims, with at least
- a pump (3) for pumping a flow of liquid working medium (13) at an increased pressure and creating a pressurized liquid working medium flow (14);
- a first heat exchanger (HE2) for creating a first partly vaporized working medium flow (15) by heating up and part vaporization of the pressurized liquid working medium flow (14) through part condensation of an expanded working medium flow (12);
- a second heat exchanger (HE4) for creating a second at least partly vaporized working medium flow (18) through further vaporization of the first partly vaporized working medium flow (15) with heat which is transferred from an external heat source (20);
- a separator for separation of a liquid phase (19) from a vapor phase (10) of the second at least partly vaporized working medium flow (18);
- a device (2), especially a turbine, for expanding the vapor phase (10), converting its energy into a usable form and creating an expanded vapor phase (11);
- a mixer (5) for mixing the liquid phase with the expanded vapor phase and creating an expanded working medium flow (12);
- a third heat exchanger (HE1) for completely condensing the partly condensed, expanded working medium flow (12a) and creating a liquid working medium flow (13).

9. Device in accordance with claim 8,
with the pressure of the vapor phase (10) amounting to less than 24 bar.

10. Device in accordance with one of the claims 8 or 9,
with the pressure of the vapor phase (10) being three to four times as great as the pressure of the expanded vapor phase (11).

11. Device in accordance with one of the claims 8 to 10,
with the working medium consisting of a multi-substance mixture.

12. Device in accordance with Claim 11,
with the multi-substance mixture being a two-substance mixture, especially an ammonia-water mixture.

13. Device in accordance with one of the claims 8 to 12,
with a geothermal liquid, especially thermal water, as external heat source (20).

14. Device in accordance with one of the claims 8 to 13,
where the external heat source (20) has a temperature of 100°C to 140°C.

## Revendications

1. Procédé de réalisation d'un cycle thermodynamique fermé comprenant au moins les stades de procédé suivants :
- on élève par pompage la pression d'un courant (13) de fluide de travail liquide et on forme un courant (14) de fluide de travail liquide mis sous pression ;
- on chauffe et on évapore partiellement le courant (14) de fluide de travail liquide mis sous pression par condensation partielle d'un courant (12) de fluide de travail détendu et on produit un premier courant (15) de fluide de travail évaporé partiellement et un courant (12a) de fluide de travail détendu condensé partiellement ;
- on évapore davantage le courant (15) de fluide de travail évaporé partiellement par de la chaleur qui est transmise depuis une source (20) extérieure de chaleur et on produit un deuxième courant (18) de fluide de travail évaporé au moins partiellement ;
- on sépare une phase (19) liquide d'une phase (10) vapeur du deuxième courant (18) de fluide de travail évaporé au moins partiellement ;
- on détend la phase (10) vapeur, on transforme son énergie en une forme utile et on produit une phase (11) vapeur détendue ;
- on mélange la phase (19) liquide à la phase (11) vapeur détendue et on forme le courant (12) de fluide de travail détendu ;
- on condense complètement le courant (12a) de fluide de travail détendu condensé partiellement et on produit le courant (13) de fluide de travail liquide.

2. Procédé suivant la revendication 1,
dans lequel la pression de la phase (10) vapeur est inférieure à 24 bars.

3. Procédé suivant la revendication 1 ou 2,
dans lequel la pression de la phase (10) vapeur est de trois à quatre fois aussi grande que la pression de la phase (11) vapeur détendue.

4. Procédé suivant l'une des revendications précédentes,
dans lequel on utilise comme fluide de travail un mélange de plusieurs substances.

5. Procédé suivant la revendication 4,
dans lequel on utilise comme mélange de plusieurs substances un mélange de deux substances, notamment un mélange d'ammoniac et d'eau.

6. Procédé suivant l'une des revendications précédentes,
dans lequel on utilise comme source (20) extérieure de chaleur un fluide géothermique, notamment de l'eau de source thermale.

7. Procédé suivant l'une des revendications précédentes,
dans lequel la source (20) de chaleur a une température de 100°C à 140°C.

8. Dispositif pour la mise en oeuvre d'un cycle thermodynamique fermé, notamment pour la mise en oeuvre du procédé suivant l'une des revendications précédentes comprenant au moins
- une pompe (3) de pompage d'un courant (13) de fluide de travail liquide pour le porter à une pression plus grande et de production d'un courant (14) de fluide de travail liquide mis sous pression ;
- un premier échangeur de chaleur (HE2) de production d'un premier courant (15) de fluide de travail évaporé partiellement par chauffage et évaporation partielle du courant (14) de fluide de travail liquide mis sous pression par condensation partielle d'un courant (12) de fluide de travail détendu ;
- un deuxième échangeur de chaleur (HE4) de production d'un deuxième courant (18) de fluide de travail évaporé au moins partiellement par évaporation supplémentaire du premier courant (15) de fluide de travail évaporé partiellement par de la chaleur qui est transmise par une source (20) extérieure de chaleur ;
- un séparateur de séparation d'une phase (19) liquide et d'une phase (10) vapeur du deuxième courant (18) de fluide de travail évaporé au moins partiellement ;
- un dispositif (2), notamment une turbine de détente de la phase (10) vapeur de transformation de son énergie en une forme utilisation et de production d'une phase (11) vapeur détendue ;
- un mélangeur (5) de mélange de la phase liquide à la phase vapeur détendue et de production d'un courant (12) de fluide de travail détendu ;
- un troisième échangeur de chaleur (HE1) de condensation complète du courant (12a) de fluide de travail détendu condensé partiellement et de production du courant (13) de fluide de travail liquide.

9. Dispositif suivant la revendication 8,
dans lequel la pression de la phase (10) vapeur est inférieure à 24 bars.

10. Dispositif suivant l'une des revendications 8 ou 9,
dans lequel la pression de la phase (10) vapeur est de trois à quatre fois aussi grande que la pression de la phase (11) vapeur détendue.

11. Procédé suivant l'une des revendications 8 à 10,
dans lequel le fluide de travail est un mélange de plusieurs substances.

12. Procédé suivant la revendication 11,
dans lequel le mélange de plusieurs substances est un mélange de deux substances, notamment un mélange d'ammoniac et d'eau.

13. Procédé suivant l'une des revendications 8 à 12,
comprenant un liquide géothermique, notamment de l'eau de source thermale, comme source (20) extérieure de chaleur.

14. Procédé suivant l'une des revendications 8 à 13,
dans lequel la source (20) extérieure de chaleur a une température de 100°C à 140°C.
